# EUROPEAN PATENT APPLICATION

(11) **EP 4 435 744 A1**
(43) Date of publication of application: **25.09.2024**
(21) Application number: 23163697.8
(22) Date of filing: 23.03.2023
(51) Int. Cl.: G06V 40/20, G06V 20/40, G06V 10/764, G06V 10/72

(54) **ACTIVITY RECOGNITION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

In various examples there is a method of generating training data. The method comprising:
receiving a video frame captured from each of a plurality from different viewpoints of a subject performing an activity. The method comprises generating a 3D point cloud from the video frames and applying colour information from the video frames to the 3D point cloud to produce a textured 3D model. The 3D model is modified to produce a modified 3D model. The method generates a synthetic image of the textured 3D point cloud by positioning a virtual camera at a specified angle, height and distance from the modified 3D model. The method repeats the operation of generating the synthetic image for a plurality of different virtual camera angles, heights and distances from the modified 3D model.

## Description

The present disclosure relates to recognition of activities depicted in videos. It is also related to generating data for training a classifier to recognise activities depicted in videos.

### BACKGROUND

Activity recognition is useful in many scenarios such as activity monitoring of older people, physiotherapy, post-stroke patient monitoring, health and safety checking such as monitoring the use of lifting machinery, handling of equipment in a factory and so on.

Video may be used to capture information about activities of human subjects and the video may be manually inspected to recognise particular activities such as a fall of a patient or potentially dangerous use of lifting machinery. However, manually inspecting video is time consuming and error prone.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect of the disclosed technology comprises a method of generating training data, the method comprising:
receiving a video frame captured from each of a plurality from different viewpoints of a subject performing an activity;
generating a 3D point cloud from the video frames and
applying colour information from the video frames to the 3D point cloud to produce a textured 3D model;
modifying the 3D model to produce a modified 3D model;
generating a synthetic image of the textured 3D point cloud by positioning a virtual camera at a specified angle, height and distance from the modified 3D model;
repeating the operation of generating the synthetic image for a plurality of different virtual camera angles, heights and distances from the modified 3D model;
saving the synthetic images labelled with the activity.

In this way a large quantity of high quality training data is generated in an efficient way. The training data includes images which would be very difficult to obtain empirically and so a full range of training data examples can be obtained which is not otherwise possible.

Preferably the method comprises repeating the process of capturing a video frame and producing a textured 3D model for each of a plurality of time instants whilst the subject performs the activity; using software, moving a virtual camera through the textured 3D models to generate a video of the subject performing the activity from the viewpoint of the virtual camera; repeating the process of moving the virtual camera for a different viewpoint to generate another video; saving the videos labelled with the activity. In this way videos are generated and available as training data in an efficient way.

Preferably the method comprises using a human pose estimator to detect 3D positions of a plurality of joints of a subject depicted in the videos. Using a human pose estimator is a practical and efficient way to accurately obtain 3D joint positions.

Preferably the method comprises training an activity classifier using the detected 3D positions of the plurality of joints of the subject and the activity labels. By using only the 3D positions rather than the whole images or videos to do the training significant efficiencies are gained without sacrifice of performance quality of the resulting classifier.

Preferably the method comprises receiving a video depicting another subject, using the human pose estimator to detect 3D positions of joints of the other subject in the received video; classifying the detected 3D positions of joints of the other subject using the activity classifier. In this way an accurate, efficient way of classifying an activity is given. The subject does not need to wear any special sensors or markers in order to have their activity classified accurately and there is no need for a human professional to be involved.

Preferably modifying the 3D model comprises modifying the 3D point cloud or modifying the colour information from the video frames prior to applying the colour information to the 3D point cloud. These are efficient powerful ways to modify the 3D model which are achieved practically. By modifying the 3D model it is possible to create training data which would not otherwise have been available. Such as for situations involving specialist equipment which is not readily available.

Preferably the method comprises receiving context data and modifying the 3D model according to the context data and one or more rules. In this way the 3D model is modified automatically and in an efficient methodical way.

Preferably the context data comprises attributes of an environment and wherein modifying the 3D model comprises any one or more of: changing a colour of clothing of the subject, adding or removing personal protective equipment, adding an object, removing an object. In this way an increased range and variety of training data is generated so as to improve accuracy of a resulting model trained using the training data.

Preferably modifying the 3D model comprises modifying a shape of the subject. This is useful to improve generalization ability and reduce bias in a model trained using the training data.

Preferably modifying the 3D model comprises modifying an appearance of the subject. This enables a model trained using the training data to be robust to different hair styles, clothing and other appearance of individual subjects.

Preferably the method comprises, for each of the synthetic images, detecting a location of each of a plurality of joints or limbs of the subject and modifying the locations according to rules. In this way the variety of training data is increased since it takes into account different skeletal shapes of subjects.

Preferably the method comprises using a game engine or kinetics to determine how to modify the locations. This gives an automated, principled way to generate training data for different skeletal shapes or ranges of articulation of skeletons.

According to another aspect there is an apparatus for generating training data, the apparatus comprising:
a processor;
a memory storing instructions which when executed on the processor implement
receiving a video frame captured from each of a plurality from different viewpoints of a subject performing an activity;
generating a 3D point cloud from the video frames and
applying colour information from the video frames to the 3D point cloud to produce a textured 3D model;
modifying the 3D model to produce a modified 3D model;
generating a synthetic image of the textured 3D point cloud by positioning a virtual camera at a specified angle, height and distance from the modified 3D model;
repeating the operation of generating the synthetic image for a plurality of different virtual camera angles, heights and distances from the modified 3D model;
saving the synthetic images labelled with the activity.

According to another aspect there is a computer program comprising instructions which when executed by a processor implement the method described herein.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 shows an activity recognition service;
FIG. 2 shows a volumetric capture system capturing video for training an activity classifier;
FIG. 3 is a flow diagram of modifying a 3D model such as that of FIG. 2;
FIG. 4 is a flow diagram of modifying joint positions;
FIG. 5 is a schematic diagram of training an activity classifier;
FIG. 6 is a schematic diagram of a computing device in which an activity classifier may be implemented.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

As mentioned above, manually inspecting video to recognise activities performed by human subjects is time consuming and error prone. The inventors have developed functionality to automatically analyse video to recognize activities. In order to do so the inventors have developed a way to generate large amounts of training data to train a machine learning activity classifier. One of the biggest challenges for developing novel machine learning algorithms, models and video analytics is the availability of labelled datasets. Even if such datasets exist, especially for activities, they are usually captured from a fixed location that results in the trained model's performance depending on similar camera positions when deployed. Most existing datasets are captured from a fixed position with a camera, or for 3 dimensional movements, the data is collected using sensors or trackers attached to the body. Using sensors or trackers attached to the body is not practical due to error attaching the sensors or trackers to the body, expense, and difficulty for subjects with impaired movement or illness. Some existing datasets can inadvertently include superfluous unwanted elements, such as background people, animals and objects.

The inventors have developed a way of using a volumetric data capture system which enables a dataset of specific activates to be curated from an almost infinite number of camera angles and distances. In addition to this, as the volumetric data capture system generates a 3D point cloud, the data captured can be manipulated to include/exclude objects or modify the texture of the objects e.g. replacing clothing or adding contextual objects.

Activity recognition is useful in the field of Ambient Assisted Living (AAL). Using wearable and home-based sensors, a person's Activities of Daily Living (ADL) can be monitored. These ADLs include movement throughout an environment, interactions with objects and activities such as walking and sitting.

The use of video streams as a means of activity recognition is prone to security concerns. Activity recognition datasets are often accompanied with issues related to curation cost, privacy, ethics and bias. In various examples described herein, using video enables context to be extracted without the need of additional wearable, room, or object sensors.

The use of video in conjunction with machine learning models requires large amounts of data for training. The inventors have recognised that video data for training is viewpoint specific. This results in any model trained on that video to require the camera placement and aspect to be the same when the model is deployed in the application. This imposes a physical limit on the deployment of any camera-based system.

The inventors have found that using use graphical simulations, such as those in video game engines, to generate synthetic data for training activity recognition functionality gives poor results. This seems to be because the synthetic data is significantly different from that observed empirically from real patients and other users performing activities in domestic settings, care homes, manufacturing settings and other real world settings.

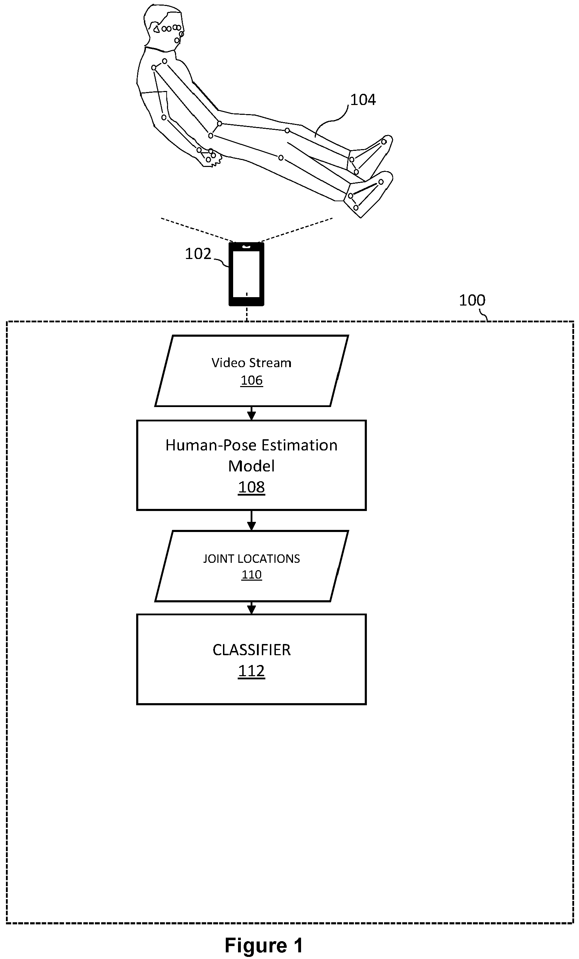

FIG. 1 shows an activity recognition service 100 deployed at a computer in communication with an image capture device 102. The image capture device 102 is any image capture device capable of capturing colour video of a human subject performing an activity. A non-exhaustive list of examples of image capture device is: camera phone, tablet computer with camera, web camera, video camera or other image capture device. In the example of FIG. 1 the image capture device 102 is shown capturing an image 104 depicting a human subject sitting on a chair with legs raised off the floor and outstretched. This is an example only as the activity recognition service may be used to recognise other activities performed by a person such as a fall, a jumping jack, operating equipment in a factory or other activities where a person makes a movement. The activity recognition service 100 is deployed at a web server such as where the activity recognition service 100 is a web service. However, this is not essential as the activity recognition service 100 may be deployed at any computing device in communication with the image capture device 102. In some cases the activity recognition service 100 is deployed at the image capture device 102 itself. The functionality of the activity recognition service 100 may be shared between the image capture device and another computing entity.

The activity recognition service 100 receives as input a video stream 106 from the image capture device. In some cases the video stream 106 is compressed by the image capture device before being sent so as to reduce bandwidth requirements of a communications link between the image capture device 102 and the activity recognition service 100. In some cases the video stream 106 is encrypted before being sent to enhance security.

The video stream 106 is input to a human pose estimation model 108 which detects, for individual frames of the video, the 3D position of a plurality of joints of a human subject depicted in the video stream 106 (shown as joint locations 110 in FIG. 1). The output of the human pose estimation model 108 may be a skeleton and 3D positions of a plurality of joints in the skeleton. Thus FIG. 1 shows a skeleton overlay on the image 104. The human pose estimation model 108 is any commercially available human pose estimation technology. A non-exhaustive list of examples of human pose estimation model 108 is: OpenPose (trade mark), AlphaPose (trade mark), DeepCut (trade mark), DensePose (trade mark).

The joint locations 110 are input to a classifier 112 which is a machine learning model that has previously been trained to recognise activities. The classifier 112 outputs a prediction of a class from a plurality of possible classes where each class is an activity. The predicted class is then usable by one or more downstream processes. Such as for alerting a carer if the predicted class indicates the subject has fallen, or for giving feedback to a physiotherapist if the subject is doing a physiotherapy exercise.

As mentioned above, there is a need to improve accuracy of classifier 112, especially where the image capture device 102 is at a variety of different viewpoints.

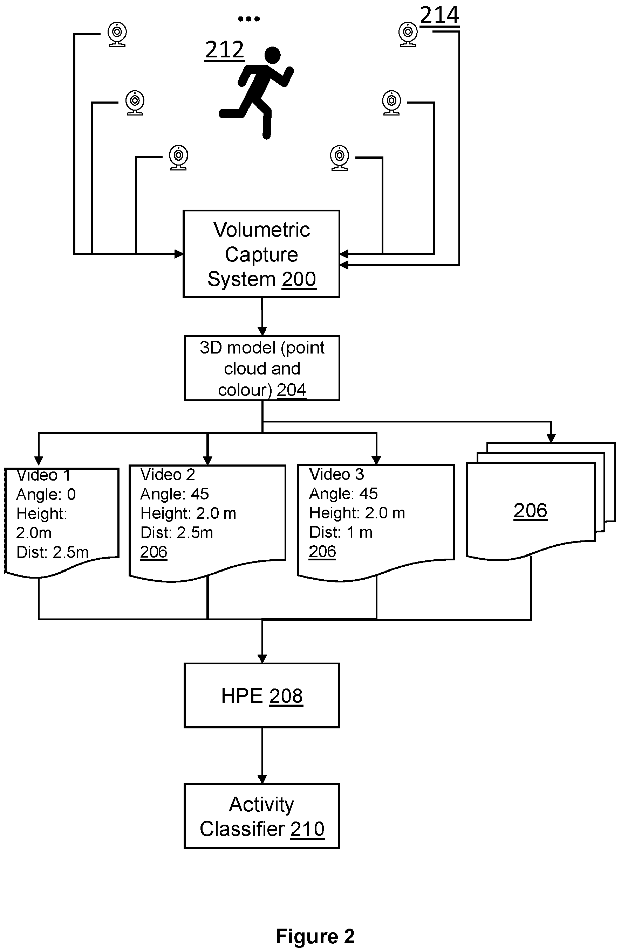

FIG. 2 shows a volumetric capture system 200 capturing video for training an activity classifier such as classifier 112 of FIG 1. The volumetric capture system 200 comprises a plurality of cameras 214 (FIG. 1 shows 6 cameras although other numbers of cameras may be used). The cameras 214 are fixed at known positions and orientations. A human subject 212 performs an activity in a field of view of the cameras 214 whilst the cameras capture video. The cameras capture colour video and optionally also depth images.

The volumetric capture system 200 receives the video and computes, for each video frame, a 3D model 204. The 3D model is a 3D point cloud with colour applied to it so as to produce a textured 3D model. The volumetric capture system 200 is any commercially available volumetric capture system 200 such as Unity (trade mark), Condense Reality (trade mark).

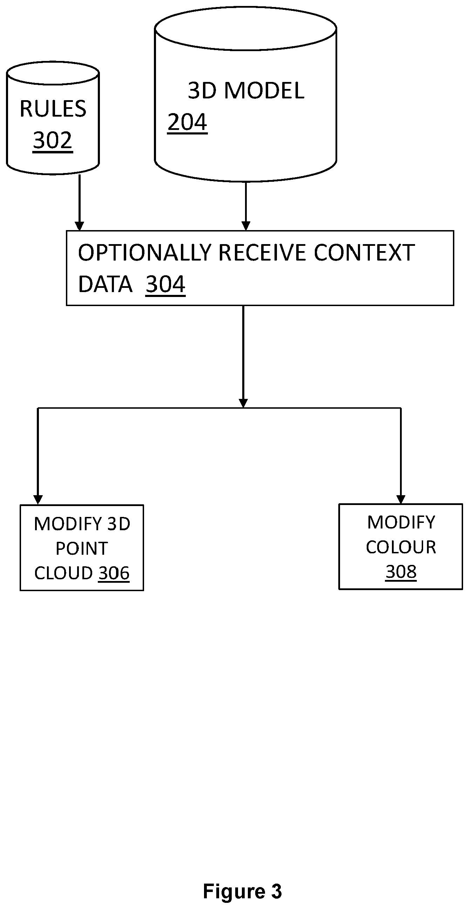

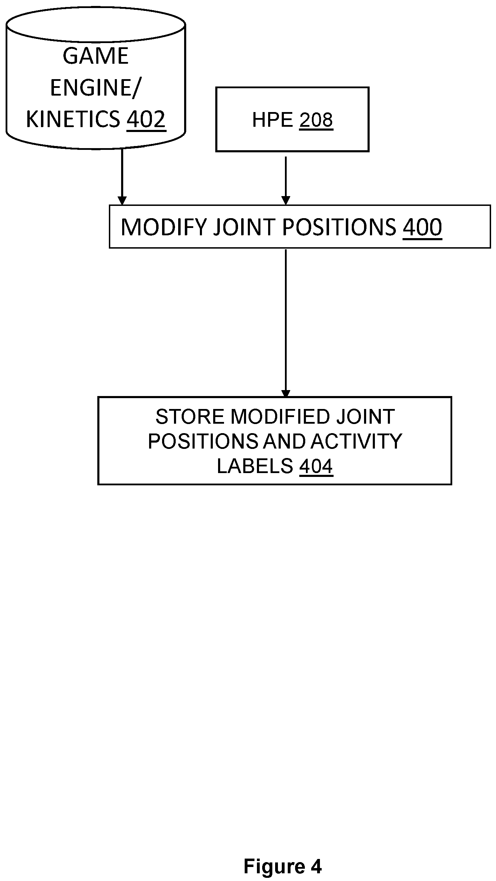

The 3D model is modified (as explained in more detail with reference to FIGs. 3 and 4.

A plurality of videos 206 are computed from the 3D model. Each video is computed for a different viewpoint. In some examples the viewpoint is static throughout the video. In the example of FIG. 2 video 1 is computed for a camera angle of zero with respect to horizontal, a camera height of 2.0 metres above the floor, and a camera distance of 2.5 metres from the subject. Video 2 is computed for a camera angle of 45 degrees with respect to horizontal, a camera height of 2.0 metres above the floor, and a camera distance of 2.5 metres from the subject. Video 3 is computed for a camera angle of 45 degrees with respect to horizontal, a camera height of 2.0 metres above the floor, and a camera distance of 1 metre from the subject. A frame of a video is computed by placing an image at the virtual camera viewpoint and projecting the 3D model with applied colour texture onto the image. To compute the other frames of the video the same is done for each of the other 3D models (there is one 3D model per frame).

In an example, the process of capturing a video frame and producing a textured 3D model is repeated for each of a plurality of time instants whilst the subject performs the activity. Using software, a virtual camera is moved through the textured 3D models to generate a video of the subject performing the activity from the viewpoint of the virtual camera; repeating the process of moving the virtual camera for a different viewpoint to generate another video; saving the videos labelled with the activity.

The videos 206 are stored together with an activity label (since the activity performed by the subject is known).

The videos are processed by a human pose estimation model 208 as described above with reference to FIG. 1.

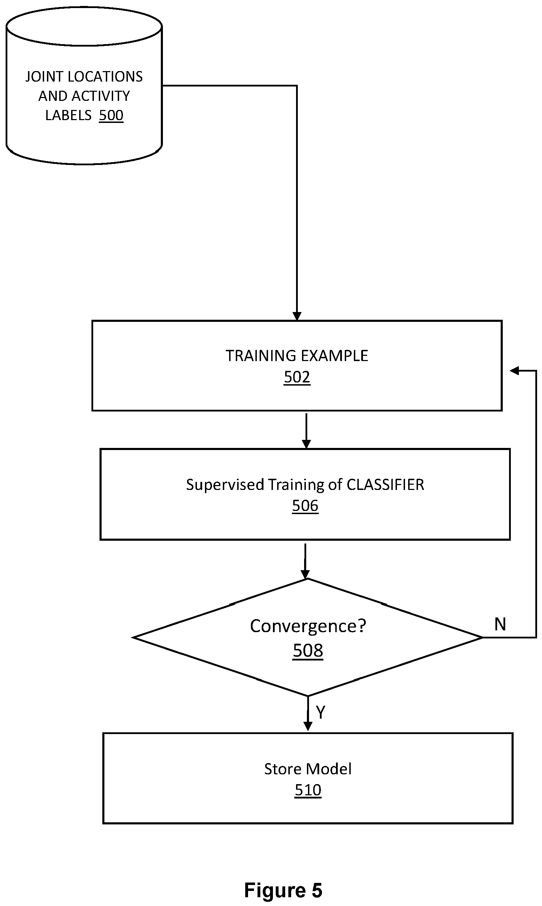

The joint positions computed by the human pose estimation model 208 are used to train an activity classifier 210 such as the classifier 112 of FIG. 1. More detail about how the training is done is given with reference to FIG. 5. Since the model is trained using only the joint positions there is increased security since images depicting the subject are not used. Since the joint positions are small in size compared to whole videos there is improved efficiency of training the classifier.

FIG. 3 is a flow diagram of modifying a 3D model 204 such as that of FIG. 2. Recall the 3D model 204 comprises a 3D point cloud and colour information textured on the 3D point cloud. One or more rules 302 are available in a store. The activity recognition service 100 optionally receives context data 304 about a context where the activity recognition service 100 is deployed. In an example the context data 304 is a type of environment where activities are to be recognized. A non-exhaustive list of examples of environment is: manufacturing plant, warehouse, care home, hospital, grocery store, domestic home. One or more of the rules 302 have conditions specifying context data. In an example, a condition of a rule is that the type of environment is a warehouse and the action of the rule is to modify the 3D model by adding a fork lift truck. In another example, a condition of a rule is that the type of environment is a care home and the action of the rule is to change a colour of a uniform of a subject in the 3D model.

Modifying the 3D model comprises modifying 306 the 3D point cloud or modifying 308 the colour information from the video frames prior to applying the colour information to the 3D point cloud. It is possible to modify both the 3D point cloud and the colour information. In an example the 3D point cloud is modified by detecting points in the 3D point cloud depicting the subject and scaling the detected points by increasing or decreasing their values. In another example the 3D point cloud is modified by detecting points in the 3D point cloud depicting a limb of the subject and increasing a thickness of the limb. In some cases the colour information is modified by replacing pixels of a specified colour with pixels of another colour.

In some cases the context data comprises attributes of an environment and modifying the 3D model comprises any one or more of: changing a colour of clothing of the subject, adding or removing personal protective equipment, adding an object, removing an object.

In some cases modifying the 3D model comprises modifying a shape of the subject. Changing a shape of the subject may be done by scaling the size of a skeleton output by the human pose estimator. Changing a shape of the subject may be done by changing a ratio of limb lengths of a skeleton output by the human pose estimator. Changing a shape of the subject may be done by increasing a thickness of limbs of the subject.

FIG. 4 is a flow diagram of modifying joint positions in images. The human pose estimator 208 computes joint positions (and optionally also limb positions) from frames of the videos as described above with reference to FIG. 2. The joint (and optionally the limb) positions are then modified 400 by the activity recognition service 100 such as by warping, translating, scaling, rotating or in other ways. The modification is specified by rules such as the rules of FIG. 3 in some cases. In other cases the modification is determined by a game engine or kinetics 402. Where a game engine is used, the game engine comprises encoded physics rules and constraints on joint positions of human skeletons. The physics rules and constraints are used to randomly modify the joint positions but ensure the modified positions are realistic for a human. Where kinetics are used these are models of articulated entities such as human skeletons where there is a chain of joints ending in an end effector such as a foot or hand. One of the joints in the chain is modified in position at random but whilst ensuring that the kinematic chain of joints is not broken. The results of the modification, i.e. the modified joint positions, are stored 404 with the activity labels (i.e. the activity known to be performed in the video).

Using the operations of FIGs. 3 and 4 it is possible to efficiently and accurately create a large dataset for training an activity classifier. The resulting activity classifier then has high accuracy and is operable for capture devices in different locations and viewpoints.

FIG. 5 is a schematic diagram of training an activity classifier such as the classifier 112 of FIG. 1. The stored joint locations and activity labels 500 are accessed. These are the joint locations and activity labels created in the methods of FIGs. 2, 3 and 4. One of the training examples 502 is taken, that is, a sequence of joint locations and associated activity label. The training example is used to carry out supervised learning 506 of a classifier. In an example the classifier is a neural network and the supervised learning comprises backpropagation such as any well known backpropagation process. The training example is processed through the neural network in a forward pass to obtain an output. The output is compared with the activity label of the training example to obtain a difference or loss. During backpropagation weights of neurons in the neural network are updated in the light of the loss in order to try to minimize the loss. A check is made at decision point 508 to check if convergence has been reached. Convergence may be reached after a specified number of training examples have been used. Convergence may be reached when weights of the neural network are changed by an amount below a threshold in a most recent training update. If convergence is not reached then another training example is taken and the process repeats from operation 502. If convergence is reached the model i.e. the classifier, is stored 510. In the example of FIG. 5 the activity classifier is a neural network. However, any type of machine learning classifier may be used such as a support vector machine, random decision forest or other machine learning classifier.

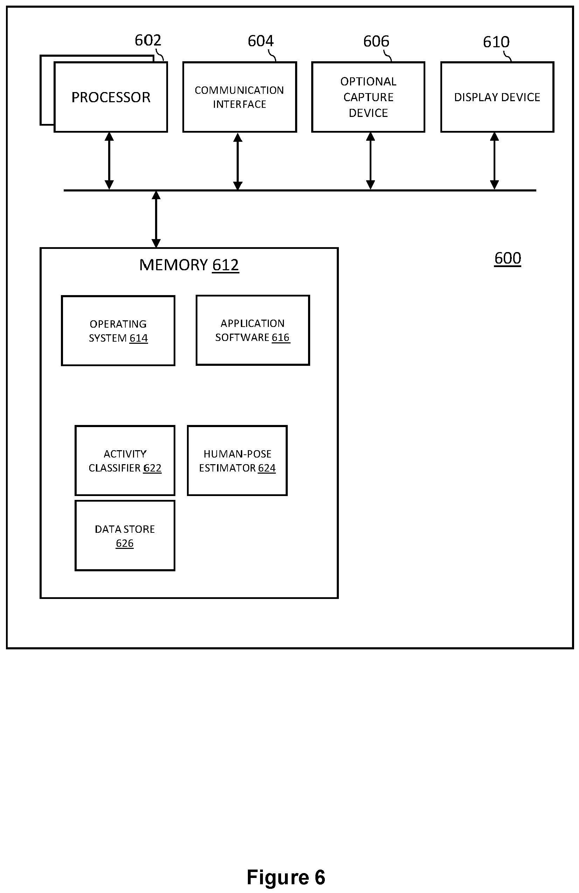

FIG. 6 illustrates various components of an example computing device 600 in which an activity recognition service, or a process for generating data to train an activity classifier, is implemented in some examples. The computing device is of any suitable form such a desktop computer, a web server, a smart phone.

The computing device 600 comprises one or more processors 602 which are microprocessors, controllers or any other suitable type of processors for processing computer executable instructions to control the operation of the device in order to perform the methods of figures 1 to 5. In some examples, for example where a system on a chip architecture is used, the processors 602 include one or more fixed function blocks (also referred to as accelerators) which implement a part of the method of figures 1 to 5 in hardware (rather than software or firmware). That is, the methods described herein are implemented in any one or more of software, firmware, hardware. The computing device has a data store 626 holding videos, activity labels, joint positions, 3D point clouds, colour data, or other data. The computing device has an activity classifier 622 and a human pose estimator 624. Platform software comprising an operating system 614 or any other suitable platform software is provided at the computing-based device to enable application software 616 to be executed on the device. Although the computer storage media (memory 612) is shown within the computing-based device 600 it will be appreciated that the storage is, in some examples, distributed or located remotely and accessed via a network or other communication link (e.g. using communication interface 604).

The computing-based device 600 also comprises a display device 610 which may be separate from or integral to the computing-based device 600. The display device 610 may provide a graphical user interface. The computing-based device 600 optionally comprises a capture device 606 such as a camera.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of generating training data, the method comprising:
receiving a video frame captured from each of a plurality from different viewpoints of a subject performing an activity;
generating a 3D point cloud from the video frames and
applying colour information from the video frames to the 3D point cloud to produce a textured 3D model;
modifying the 3D model to produce a modified 3D model;
generating a synthetic image of the textured 3D point cloud by positioning a virtual camera at a specified angle, height and distance from the modified 3D model;
repeating the operation of generating the synthetic image for a plurality of different virtual camera angles, heights and distances from the modified 3D model;
saving the synthetic images labelled with the activity.

2. The method of claim 1 comprising repeating the process of capturing a video frame and producing a textured 3D model for each of a plurality of time instants whilst the subject performs the activity; using software, moving a virtual camera through the textured 3D models to generate a video of the subject performing the activity from the viewpoint of the virtual camera; repeating the process of moving the virtual camera for a different viewpoint to generate another video; saving the videos labelled with the activity.

3. The method of claim 2 comprising using a human pose estimator to detect 3D positions of a plurality of joints of a subject depicted in the videos.

4. The method of claim 3 comprising training an activity classifier using the detected 3D positions of the plurality of joints of the subject and the activity labels.

5. The method of claim 4 comprising receiving a video depicting another subject, using the human pose estimator to detect 3D positions of joints of the other subject in the received video; classifying the detected 3D positions of joints of the other subject using the activity classifier.

6. The method of any preceding claim wherein modifying the 3D model comprises modifying the 3D point cloud or modifying the colour information from the video frames prior to applying the colour information to the 3D point cloud.

7. The method of any preceding claim comprising receiving context data and modifying the 3D model according to the context data and one or more rules.

8. The method of claim 7 wherein the context data comprises attributes of an environment and wherein modifying the 3D model comprises any one or more of: changing a colour of clothing of the subject, adding or removing personal protective equipment, adding an object, removing an object.

9. The method of any preceding claim wherein modifying the 3D model comprises modifying a shape of the subject.

10. The method of any preceding claim wherein modifying the 3D model comprises modifying an appearance of the subject.

11. The method of any preceding claim comprising, for each of the synthetic images, detecting a location of each of a plurality of joints or limbs of the subject and modifying the locations according to rules.

12. The method of claim 11 comprising using a game engine or kinetics to determine how to modify the locations.

13. An apparatus for generating training data, the apparatus comprising:
a processor;
a memory storing instructions which when executed on the processor implement
receiving a video frame captured from each of a plurality from different viewpoints of a subject performing an activity;
generating a 3D point cloud from the video frames and
applying colour information from the video frames to the 3D point cloud to produce a textured 3D model;
modifying the 3D model to produce a modified 3D model;
generating a synthetic image of the textured 3D point cloud by positioning a virtual camera at a specified angle, height and distance from the modified 3D model;
repeating the operation of generating the synthetic image for a plurality of different virtual camera angles, heights and distances from the modified 3D model;
saving the synthetic images labelled with the activity.

14. The apparatus of claim 13 wherein modifying the 3D model comprises modifying the 3D point cloud or modifying the colour information from the video frames prior to applying the colour information to the 3D point cloud.

15. A computer program comprising instructions which when executed by a processor implement the method of any of claims 1 to 12.
